Europäisches Patentamt

European Patent Office

Office européen des brevets

(19)

(11) **EP 1 194 882 B1**

(12) **EUROPÄISCHE PATENTSCHRIFT**

(45) Veröffentlichungstag und Bekanntmachung des Hinweises auf die Patenterteilung:
**10.03.2004  Patentblatt 2004/11**

(51) Int Cl.⁷: $G06K\ 9/64$, G06K 9/68, G06T 7/00

(21) Anmeldenummer: 00940185.2

(22) Anmeldetag: **11.05.2000**

(86) Internationale Anmeldenummer:
**PCT/DE2000/001478**

(87) Internationale Veröffentlichungsnummer:
**WO 2000/073978 (07.12.2000 Gazette 2000/49)**

(54) **MUSTERSUCHE**

PATTERN SEARCHING

RECHERCHE DE FORMES

(84) Benannte Vertragsstaaten:
**AT DE FR GB IT NL**

(30) Priorität: **26.05.1999  DE 19924008**

(43) Veröffentlichungstag der Anmeldung:
**10.04.2002  Patentblatt 2002/15**

(73) Patentinhaber: SIEMENS
AKTIENGESELLSCHAFT
80333 München (DE)

(72) Erfinder:
• **DECO, Gustavo**
**D-85579 Neubiberg (DE)**
• **SCHÜRMANN, Bernd**
**D-85778 Haimhausen (DE)**

(56) Entgegenhaltungen:
• **YOUNG S S ET AL: "FOVEAL AUTOMATIC TARGET RECOGNITION USING A NEURAL NETWORK" PROCEEDINGS OF THE INTERNATIONAL CONFERENCE ON IMAGE PROCESSING (ICIP),US,NEW YORK, IEEE, 16. September 1996 (1996-09-16), Seiten 303-306, XP000780648 ISBN: 0-7803-3259-8**

• **KUNIHIKO FUKUSHIMA: "NEOCOGNITRON: A HIERARCHICAL NEURAL NETWORK CAPABLE OF VISUAL PATTERN RECOGNITION" NEURAL NETWORKS,GB,ELSEVIER SCIENCE PUBLISHERS, BARKING, Bd. 1, Nr. 2, 1988, Seiten 119-130, XP000086870 ISSN: 0893-6080**

• **YU Y ET AL: "AN ACTIVE MODEL-BASED ALGORITHM FOR CORRESPONDENCE AND ESTIMATION OF POSE PARAMETERS OF OBJECTS" INTERNATIONAL CONFERENCE ON SYSTEMS, MAN AND CYBERNETICS,US,NEW YORK, IEEE, 22. Oktober 1995 (1995-10-22), Seiten 269-274, XP000586264 ISBN: 0-7803-2560-5**

• **DECO G ET AL: "Regularizing stochastic Pott neural networks by penalizing mutual information" ICANN '94. PROCEEDINGS OF THE INTERNATIONAL CONFERENCE ON ARTIFICIAL NEURAL NETWORKS, PROCEEDINGS OF INTERNATIONAL CONFERENCE ON ARTIFICIAL NEURAL NETWORKS, SORRENTO, ITALY, 26-29 MAY 1994, Seiten 693-696 vol.1, XP000961610 1994, Berlin, Germany, Springer-Verlag, Germany ISBN: 3-540-19887-3**

• **VAN DE LAAR P. et al: "Task-Dependent Learning of Attention" NEURAL NETWORKS, ELSEVIER SCIENCE PUBLISHERS, BARKING, GB, ISSN 0893-6080, VOL. 10, NR: 6, PG. 981-992 1997-08-01 XP004089417**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 194 882 B1

**Beschreibung**

Die vorliegende Erfindung bezieht sich auf ein Verfahren zur Suche eines Referenzmusters in einem Suchfeld, das technisch gut realisierbar sein soll. Durch diese Mustersuche soll also wenigstens ein Muster, das durch die Werte mehrerer Parameter gekennzeichnet ist, in einem vorgegebenen Suchfeld gefunden werden. Eine typische Anwendung eines solchen Mustersuchverfahrens liegt dabei in der Robotik, der Textanalyse, der Bildanalyse und im Bereich bildgebender Systeme in der Medizintechnik (wie beispielsweise bei der automatischen Tumorerkennung in der Mamographie etc.).

Es ist anzumerken, daß unter "Muster" im Sinne der vorliegenden Beschreibung jede 2- oder mehrdimensionale Darstellung sensorischer Information zu verstehen ist, wobei es keine Rolle spielt, ob diese Information akustischer, visueller oder sonstiger Art ist.

Grundsätzlich ist es bei der technischen Realisierung von Mustersuchverfahren ein Problem, die potentielle sehr große Menge an Informationen des Suchfelds zu verarbeiten. Aus dem Stand der Technik sind Modelle bekannt, die eine sogenannte Prioritätsabbildung zur Erfassung potentiell interessanter Bereiche einer Eingangsinformation sowie einen Fokussiermechanismus zur Verringerung der eingehenden Information des Suchfelds zugrunde legen, wodurch endliche Bearbeitungskapazitäten die verbleibende Informationsmenge bearbeiten können.

Eine Prioritätsabbildung ist dabei eine topographische Abbil dung des Suchfelds, die die Relevanz verschiedener Bereiche des Suchfelds wiedergibt, und die somit einen Mechanismus bereitstellt, um aposteriori das Suchfeld zu verkleinern. Verschiedene Implementierungen von solchen Prioritätsabbildungen sind bekannt. Beispielsweise ist aus Koch und Ullmann (1985) "Shifts in selective visual attention: Towards the underlying neural circuitry", Human NeuroBiology, 4, Seite 219 bis 227, bekannt, eine solche Prioritätsabbildung durch sogenannte Bottom-Up-Information aufzubauen, wobei einer weiterer Mechanismus vorgesehen ist, der die auffallendste Position in der Prioritätsabbildung auswählt und mittels einer Fokussierungstechnik die Aufmerksamkeit, daß heißt eine höherwertige Verarbeitung, auf diese Position lenkt.

Aus Van de Laar et al (1997) "Task-dependent learning of attention", Neural Networks, 10, Seiten 981 bis 992 ist es bekannt, eine Prioritätsabbildung aufgabenabhängig zu erstellen, um Top-Down-Information einzubinden. Um der Tatsache Rechnung zu tragen, daß sich das gesuchte Muster bei jeder Aufgabe ändern kann, wird eine neue aufgabenabhängige Prioritätsabbildung definiert.

Aus Wolfe (1994) "Guided search 2.0: A revised model of visual search", Psychonomic Bulletin & Review, 1, Seiten 202 bis 238 ist es bekannt, gemäß einem geführten Suchmodell die Verwendung von Bottom-Up und Top-Down-Information für die Erstellung einer Prioritätsabbildung zu verwenden.

Ausgehend von dem oben genannten Stand der Technik ist es Aufgabe der vorliegenden Erfindung, eine Technik zur Mustersuche bereitzustellen, die eine besonders effiziente technische Realisierung ermöglicht. Im Hintergrund sind als Rahmenbedingungen die Möglichkeiten zu sehen, die in der Praxis realisierbare Hardware- oder Softwarelösungen bereitstellen.

Diese Aufgabe wird erfindungsgemäß durch die Merkmale des Anspruchs 1 gelöst. Die abhängigen Ansprüche bilden den zentralen Gedanken der Erfindung in besonders vorteilhafter Weise weiter.

Erfindungsgemäß ist also ein Verfahren zur Suche eines Referenzmusters in einem vorgegebenen Suchfeld vorgesehen, wobei das Referenzmuster durch die Werte wenigstens zweier vorbestimmter Parameter gekennzeichnet wird. Zuerst wird das vorgegebene Suchfeld als aktuelles Suchfeld gesetzt. Pro vorbestimmtem Parameter wird eine topographische Abbildung des aktuellen Suchfelds erzeugt, wobei die topographische Abbildung den Wert des entsprechenden Parameters des Referenzmusters berücksichtigt. Durch voneinander unabhängige Verarbeitung der Information der topographischen Abbildungen wird jeweils eine Positionsinformation erzeugt, die wenigstens eine vermutete Position des gesuchten Referenzmusters in dem aktuellen Suchfeld bezüglich des jeweiligen Parameters angibt. Ein neues Suchfeld wird auf Grundlage einer Verknüpfung der jeweiligen Positionsinformationen definiert. Das neue Suchfeld gibt die vermutete Position des Referenzmusters in dem vorgegebenen Suchfeld an.

Dieses Verfahren läßt sich unter Berücksichtigung begrenzter Verarbeitungskapazitäten in der Praxis technisch verhältnismäßig gut realisieren, da die Information der topographischen Abbildungen voneinander unabhängig verarbeitet wird und diese serielle Verarbeitung durch eine klassische (serielle) Rechnerarchitektur gut implementierbar ist.

Die Erzeugung der topographischen Abbildungen kann durch eine parallele oder in der Praxis quasi-parallele Verarbeitung der Information des aktuellen Suchfelds erfolgen. Auch dieser Schritt ist technisch verhältnismäßig gut zu realisieren, da die topographischen Abbildungen gemäß diesem Aspekt der Erfindung zwar parallel erzeugt werden, aber ihre Erzeugung jeweils nur eine Verarbeitung auf verhältnismäßig niedriger Ebene erfordert.

Die Information in den topographischen Abbildungen können beispielsweise jeweils durch ein neuronales Hopfield-Netz verarbeitet werden, wobei jeweils ein Hopfield-Netz eine Positionsinformation ausgibt. Hopfield-Netze sind dabei dem Fachmann aus dem Stand der Technik gut bekannt. Beispielsweise wird verwiesen auf Zakharian et al "Neuronale Netze für Ingenieure" Vieweg Verlag, Braunschweig, Wiesbaden, 1998.

Die Hopfield-Netzwerke können insbesondere aus Pott-Neuronen aufgebaut sein. Pott-Neuronen sind beispielsweise bekannt aus Peterson et al, "A new method for mapping optimization problems onto neural networks", International journal of neural Systems, 1, Seiten 3 bis 12. Insofern wird auf diesen Stand der Technik verwiesen.

Das Verfahren kann weiterhin den Schritt der Ermittlung der Veränderung zwischen dem neuen Suchfeld und dem aktuellen Suchfeld aufweisen. Für den Fall, daß die ermittelte Veränderung größer ist als ein vorgegebener Schrankenwert kann das aktuelle Suchfeld gleich dem neuen Suchfeld gesetzt werden und die Schritte der Erzeugung jeweils einer topographischen Abbildung, der unabhängigen Verarbeitung der Information der topographischen Abbildungen, der Definition eines neuen Suchfelds sowie der Ermittlung der Veränderung zwischen dem neuen Suchfeld und dem aktuellen Suchfeld wiederholt werden. Für den Fall, daß die ermittelte Veränderung kleiner oder gleich dem vorgegebenen Schrankenwert ist, wird angenommen, daß das neue Suchfeld die vermutete Position des Referenzmusters in dem vorgegebenen Suchfeld angibt.

Die topographischen Abbildungen des aktuellen Suchfelds können durch neuronale Netzwerke erzeugt werden, die auf das zu suchende Muster trainiert und denen Informationen von parametrisierten Abbildungen des aktuellen Suchfelds eingegeben werden.

Zusätzlich kann eine kombinierte topographische Abbildung bezüglich der Kombination wenigstens zweier Parameter erzeugt werden und dann wie oben ausgeführt weiter verarbeitet werden.

Eine besonders vorteilhafte Anwendung des Verfahrens wie oben ausgeführt ist die automatisierte Suche von Gegenständen, die durch einen Roboter gehandhabt werden sollen.

Die vorliegende Erfindung wird nunmehr bezugnehmend auf die begleitenden Figuren der anliegenden Zeichnungen und anhand von Ausführungsbeispielen näher erläutert, wobei in den Figuren der Zeichnungen gleiche Bezugszeichen jeweils gleiche oder gleichwertige Bauteile bezeichnen.

Figur 1 zeigt eine schematische Gesamtansicht eines Systems gemäß einem Ausführungsbeispiel zur Suche eines Musters in einem Suchfeld,

Figur 2 zeigt eine funktionale Darstellung des Systems von Figur 1,

Figur 3 zeigt ein Flußdiagramm des Ablaufs, wie er durch die in Figur 1 und 2 dargestellten Systeme ausgeführt werden kann, und

Figur 4 zeigt Meßergebnisse, die die zur Suche eines Musters benötigte Zeit abhängig von der Komplexität der Suche darlegen.

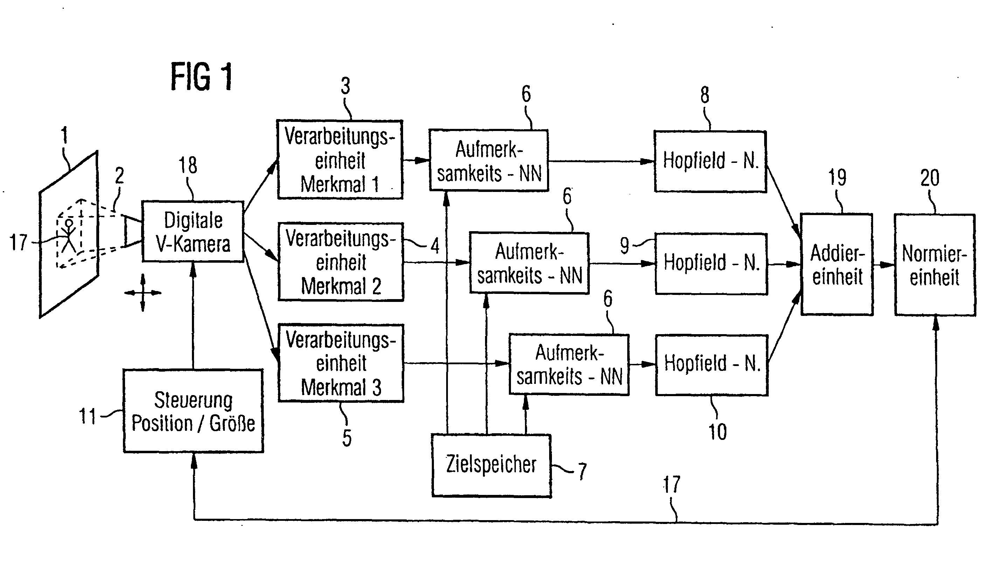

Zuerst soll bezugnehmend auf Figur 1 der Aufbau eines Systems zur Suche eines Musters in einem Suchfeld gemäß einem Ausführungsbeispiel erläutert werden.

Bei dem in Figur 1 dargestellten und bezugnehmend darauf erläuterten Ausführungsbeispiel ist das Muster eine Bilddarstellung. Wie bereits weiter oben ausgeführt wurde, kann das Muster auch eine Darstellung anderer sensorischer Informationen sein, die sich 2- oder mehrdimensional darstellen lassen. Gleiches gilt entsprechend für das Suchfeld.

Das Muster 17 ist in einem Gesamtsuchfeld 1 sozusagen "versteckt". Die Position des Musters 17 in dem Suchfeld 1 soll erfaßt werden. Gemäß dem Ausführungsbeispiel von Figur 1 wird die Bildinformation des Suchfelds 1 über eine digitale Videokamera 18 erfaßt, deren Beobachtungsfenster 2 auf dem Suchfeld 1 verändert werden kann, daß heißt sowohl die Größe wie auch die Position des Beobachtungsfensters (Bildausschnitt 2) der digitalen Videokamera 18 auf dem Suchfeld 1 können verändert werden. Die Bildinformation der digitalen Videokamera 18, daß heißt genauer gesagt die Informationen in dem Beobachtungsfenster 2 der digitalen Videokamera 18, wird mehreren Verarbeitungseinheiten 3, 4, 5 zugeführt, wobei je eine der Verarbeitungseinheiten 3, 4, 5 für die Erstellung einer sogenannten Merkmalsabbildung zuständig ist, wie noch weiter unten genauer erläutert werden wird.

Die Verarbeitungseinheit 3 ist dabei für die Erstellung einer Merkmalsabbildung bezüglich des Parameters 1 zuständig, die Verarbeitungseinheit 4 ist für die Erstellung einer Merkmalsabbildung hinsichtlich eines Parameters 2 zuständig und die Verarbeitungseinheit 5 ist für die Erstellung einer Merkmalsabbildung bezüglich des Parameters 3 zuständig. Die Erstellung der Merkmalsabbildungen ist unabhängig von der gestellten Aufgabe, d.h. den Werten der Parameter des zu suchenden Referenzmusters.

Diese Parameter können beispielsweise Größe, Farbe und Position des zu suchenden Musters sein.

Die von den Verarbeitungseinheiten 3, 4, 5 erzeugten Merkmalsabbildungen werden jeweils separat Aufmerksamkeits-Netzwerken 6 zugeführt. Die Aufmerksamkeits-Netzwerke 6 werden vorab, daß heißt vor der eigentlichen Mustersuche mit in einem Zielspeicher 7 abgelegten zu suchenden Mustern trainiert.

Wie später genauer erläutert werden wird, erzeugen die Aufmerksamkeits-Netzwerke 6 jeweils unabhängig voneinander sogenannte Prioritätsabbildungen. Dazu werden den Aufmerksamkeits-Netzwerken 6, die wie bereits gesagt durch zu suchende Muster trainiert wurden, die Informationen der durch die Verarbeitungseinheiten 3, 4, 5 erzeugten Merkmalsabbildungen zugeführt. Die Prioritätsabbildungen stellen topographische Abbildungen des Suchfelds 1 dar, die durch die Aufmerksamkeits-Netzwerke 6 abhängig von der Relevanz des jeweils zugeordneten Parameters 1, 2 oder 3 für das zu suchende Muster, mit dem die Aufmerksamkeits-Netzwerke 6 trainiert werden, gewichten.

Die Ausgangssignale der Aufmerksamkeits-Netzwerke 6 werden jeweils unabhängig voneinander separaten Hopfield-Netzwerken 8, 9, 10 zugeführt. Wie später noch genauer erläutert werden wird, lösen die Hopfield-Netzwerke 8, 9, 10 Prioritätskonflikte der jeweiligen Parameter unabhängig voneinander. Die Ausgangssignale der Hopfield-Netzwerke 8, 9 10 werden einer Addiereinheit 19 zugeführt, die ein Beispiel für eine Verknüpfung der Ausgangssignale der Hopfield-Netzwerke 8, 9, 10 darstellt und dann durch eine Normiereinheit 20 normiert wird.

Die normierten verknüpften Ausgangssignale der Hopfield-Netzwerke 8, 9, 10 werden als ein Rückführsignal 17 zur Erstellung eines neuen Suchfelds verwendet. In dem Ausführungsbeispiel von Figur 1 wird das Rückführsignal 17 einer Steuereinheit 11 zugeführt, die abhängig von dem zugeführten Rückführsignal 17 die Position und/oder die Größe des Beobachtungsfensters 2 der digitalen Videokamera 18 bezüglich des Suchfelds 1 verändert.

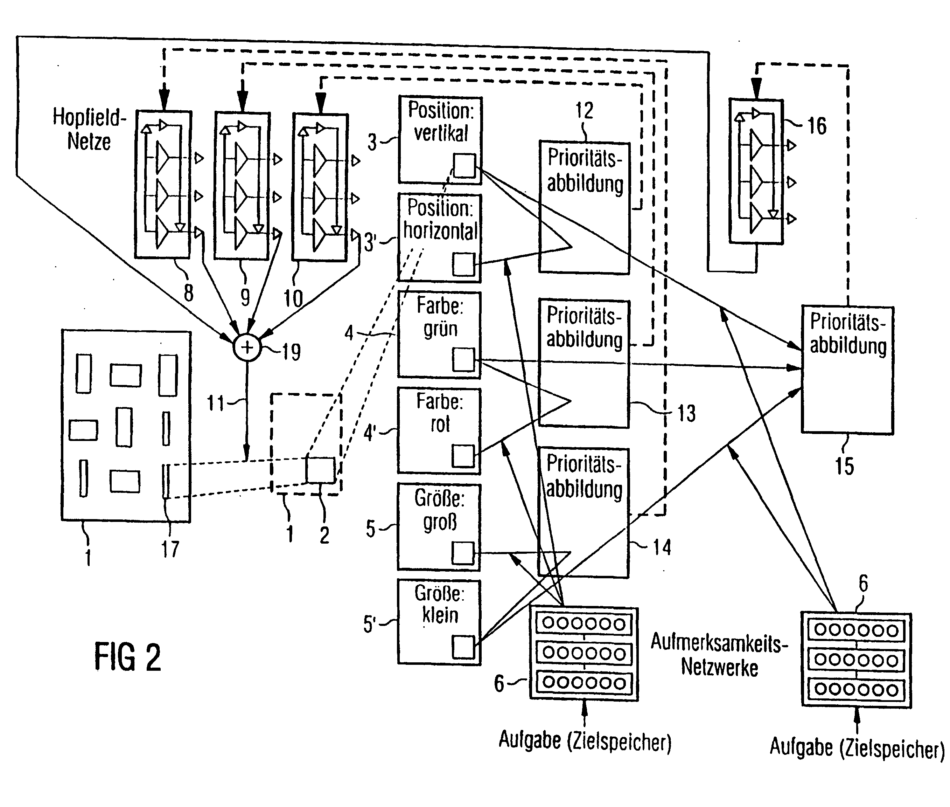

Die Funktion des in Figur 1 dargestellten Systems wird nunmehr bezugnehmend auf Figur 2 erläutert.

Grundsätzlich umfaßt dieser Ablauf zwei Phasen, nämlich eine erste Phase, bei der die gesamte Information des Suchfelds parallel zur Erzeugung der Merkmalsabbildungen 3, 3', 4, 4', 5, 5' und der Prioritätsabbildungen 12, 13, 14 parallel verarbeitet wird. In der zweiten Phase werden dann die Informationen der Prioritätsabbildungen jeweils getrennt voneinander und daher sozusagen seriell weiterverarbeitet und abschließend verknüpft, um ein neues Suchfeld zu erzeugen.

Aus dem oben genannten Konzept ergibt sich eine gute technische Realisierbarkeit, da einerseits während der ersten Phase der parallelen Verarbeitung des Suchfelds die Verarbeitung auf verhältnismäßig niedriger Ebene erfolgt und andererseits die höherwertige Verarbeitung auf Grundlage der Informationen der Prioritätsabbildungen 12, 13, 14 quasi seriell erfolgt.

In der ersten Phase werden Informationen sämtlicher Punkte des Suchfelds 1 parallel verarbeitet, um die Merkmalsabbildungen 3, 3', 4, 4', 5, 5' zu erzeugen. Jede Merkmalsabbildung 3, 3', 4, 4', 5, 5' stellt eine erste topographische Abbildung des Suchfelds bezüglich jeweils eines Parameters dar. Die topographische Abbildung gemäß der Merkmalsabbildungen ist dabei noch unabhängig von der Suchaufgabe, daß heißt unabhängig von dem zu suchenden Muster.

Ausgehend von den Merkmalsabbildungen werden Prioritätsabbildungen 12, 13, 14 erzeugt, die topographische Abbildungen des Suchfelds darstellen, die die Relevanz des entsprechenden Parameters an einer vorbestimmten Position im Suchfeld bezüglich der Aufgabe (des in dem Suchfeld zu suchenden Musters) wiedergeben.

Dazu werden sogenannte Aufmerksamkeits-Netzwerke 6 verwendet, die (vorab) durch wenigstens ein zu suchendes Muster trainiert wurden. In dieses derart trainierten Aufmerksamkeits-Netzwerke 6 werden dann jeweils die Informationen der Merkmalsabbildungen 3, 3', 4, 4', 5, 5' eingegeben, wodurch als Ausgangsinformation der Aufmerksamkeits-Netzwerke 6 die jeweiligen Prioritätsabbildungen 12, 13, 14 erzeugt werden.

Wie bereits ausgeführt werden dabei die Prioritätsabbildungen 12, 13, 14 getrennt für jeden Parameter erzeugt. Die Informationen der Prioritätsabbildungen 12, 13, 14 werden dann weiterhin getrennt Hopfield-Netzwerken 8, 9, 10 zugeführt.

In den Prioritätsabbildungen 12, 13, 14 liegen sozusagen Informationen vor, an welchen Positionen in dem Suchfeld vermutlich bezüglich des jeweiligen Parameters das zu suchende Muster vorliegen könnte.

Die Hopfield-Netzwerke dienen dazu, diesen "Konflikt" mehrerer vermuteter Positionen pro Parameter für jeden Parameter getrennt zu lösen.

Die Ausgangssignale der Hopfield-Netzwerke 8, 9, 10 werden verknüpft, beispielsweise addiert 19 und abhängig von der Verknüpfung wird dann ein neues Suchfeld definiert.

Nunmehr sollen im Detail die beiden Hauptphasen des Ablaufs erläutert werden.

Phase 1:

Diese Phase besteht aus der parallelen Erfassung der Bildinformation der gesamten Fläche 1 zur Erzeugung der topographischen Abbildungen.

Zuerst soll die Fläche 1 als eine Matrix visueller Gegenstände betrachtet werden. Die Position von jedem Gegenstand an der Suchfläche wird durch zwei Indizes ij spezifiziert, die die Position in der Zeile i und der Spalte j bezeichnen. Die Merkmalsabbildungen und die Prioritätsabbildungen sind topographisch geordnet, d. h. die Aufnahmefelder eines Neurons ij an einer dieser Abbildungen sind für die Position ij der Suchfläche 1 sensitiv zuständig. Jede gesuchte Muster kann durch insgesamt K verschiedene Parameter definiert werden kann. Jeder Parameter, der den Index k trägt, kann L(k) verschiedene Werte einnehmen, beispielsweise kann der Parameter Farbe die Werte rot oder grün einnehmen (in diesem Fall ist L(Farbe) = 2). Für jede entsprechende Merkmalsabbildung sind L(k) Schichten an Neuronen vorgesehen, um das Vorhandensein von jedem Parameterwert zu charakterisieren. Durch $f_{ijkl}$ sei die Aktivität

des Neurons in der Merkmalsabbildung k bezeichnet, das für den Wert 1 sensitiv ist und das ein Aufnahmefeld an der Position ij der Suchfläche 1 aufweist. Die Aktivitäten dieser Neuronen sind durch eine reale Zahl zwischen 0 und 1 gegeben, die das Vorhandensein des entsprechenden Parameterwerts an der entsprechenden Position kennzeichnen. Der Maximalwert entspricht dem Vorhandensein eines entsprechenden Parameterwerts und der Minimalwert einem Fehlen von diesem Parameter an dieser Stelle. Eine neurale Implementierung solcher Merkmalsabbildungen ist offenbart in Vandelaar et al., "Task-Dependent Learning of Attention", Neural Networks, 19, 981 - 992. Gemäß diesem Ansatz sind die Eingabegegenstände der Suchfläche 1 direkt durch ein K-Tupel von Zahlen gegeben, die seine Parameterwerte repräsentieren.

Diese K-Tupel-Eingabe kann dann direkt zum Erhalten der Aktivität von Neuronen an jeder Position und in jeder Schicht der Merkmalsabbildung, d. h. die Werte von $f_{ijkl}$, verwendet werden. Dieser Wert ist beispielsweise 0,9, wenn der Gegenstand den entsprechenden Parameterwert aufweist, und in den übrigen Fällen 0. Wenn beispielsweise drei verschiedene Parameter angenommen werden (Farbe, Position, Größe), die jeweils zwei verschiedene Werte (rot=1 und grün=2 für Farbe, vertikal=1 und horizontal=2 für Position und groß=1 und klein=2 für Größe) einnehmen können, dann kann jeder Zielgegenstand durch ein Triplet gekennzeichnet werden (beispielsweise wenn die erste Zahl die Farbe, die zweite Zahl die Position und die mation wird zur Definierung der Aktivität der Neuronen in jeder Schicht von jeder Merkmalsabbildung verwendet (beispielsweise ergibt das Triplet 121 eine Aktivität von 0,9 für das Neuron, das rot erfaßt, und 0 für das Neuron, das grün erfaßt, usw.).

Die Aktivität dieser Neuronen an der Stelle ij in jeder Merkmalsabbildung wird durch die Intensität der Aufmerksamkeit parametrisiert, die durch Steuerneuronen $O_{ij}$ definiert wird. Dies wird parametrisiertes Ausgangssignal $F_{ijkl}$ genannt, das durch

$$F_{ijkl}=O_{ij}(f_{ijkl}+\zeta) \tag{1}$$

dargestellt ist und wobei $\xi$ ein Gaussverteilungs-förmiges Rauschsignal ist, das der eigentlichen Bildinformation überlagert ist.

Jeder Parameter hat eine eigene Prioritätsabbildung, die Neuronen aufweist, die die Relevanz des zugeordneten Merkmals für die Suche an jeder Position beschreiben. Durch $h_{ijk}$ sei die Aktivität des Neurons an der Stelle ij in der Prioritätsabbildung entsprechend dem Parameter k beschrieben. Diese Aktivitätswerte werden durch die Ausgangssignale eines neuralen Netzwerks (dem Aufmerksamkeits-Netzwerk 6) des Vorwärtsführungstyps und mit einer verborgenen Schicht definiert, wobei das Aufmerksamkeitsnetzwerk 6 auf Grundlage der Aufgabe (Zielgegenstand), d. h. der Merkmale, die den Zielgegenstand kennzeichnen, eine hohe Aktivität an Stellen der Merkmalsabbildungen erzeugt, die die entsprechenden Parameter des Zielgegenstands zusammenfassen. Die entsprechenden Gleichungen sind somit

$$h_{ijk} = \tanh\left( \sum_{l=1}^{L(k)} a_{ijkl} f_{ijkl} + v \right), \tag{2}$$

$$a_{ijkl} = \sum_{m=1}^{V} w_{ijklm} \tanh\left( \sum_{k}^{K} \sum_{l}^{L(k)} W_{mkl} t_{kl} \right) \tag{3}$$

wobei $v$ ein gaussförmiger Rauschanteil ist und V die Anzahl der verborgenen Einheiten in der verborgenen Schicht des Netzwerks sind. Die Gleichung 3 beschreibt das Aufmerksamkeitsnetzwerk, das eine zielgegenstandsabhängige Eingangsinformation $t_{kl}$ erhält. Die Eingabeinformation $t_{kl}$ besteht aus

$$\sum_{k=1}^{K} L(k) \tag{3'}$$

Knoten, wobei ein Knoten für jeden Parameterwert steht. Wenn ein Parameter in den Zielgegenstand oder in einer Gruppe von möglichen Zielgegenständen vorliegt, ist der Wert des entsprechenden Zielgegenstands-Eingabeknotens gleich 1 und in den übrigen Fällen gleich 0. Die Tensoren w und W sind Gewichtungsparameter des Aufmerksamkeits-Netzwerks 6, und $a_{ijkl}$ sind seine Ausgangssignale, die die Werte der Merkmalsabbildungen zur Erzeugung der Prioritätsabbildungen parametrisieren.

Dieses neurale Aufmerksamkeitsnetzwerk 6 wird unter Verwendung bekannte Rückführungs(Back-Propagation)-Techniken vor der eigentlichen Verwendung trainiert, um die Werte der Tensoren w und W zu ermitteln, die die Kostenfunktion

$$C = \sum_i \ \sum_j \sum_k \left( h_{ijk} - H_{ijk} \right)^2 \qquad\qquad (4)$$

minimieren, wobei die erwünschten Werte $H_{ijk}$ auf 1 gesetzt werden, wenn der Gegenstand an der Position ij das gleiche Merkmal k wie der eigentliche Zielgegenstand aufweist. Das Aufmerksamkeits-Netzwerk 6 wird somit auf zu suchende Muster trainiert.

Um auch eine höherwertige Verarbeitung einzuführen, die Zusammenhänge erkennen kann, ist wie in Fig. 2 dargestellt eine Prioritätsabbildung 15 vorgesehen, der Informationen von Merkmalsabbildungen von verschiedenen Parametern zugeführt werden. Diese Prioritätsabbildung 15 weist Neuronen mit Ausgangswerten $\boldsymbol{h}_{ij}$ auf, die durch

$$\hat{h}_{ij} = \sum_{k=1}^{K} B_k \tanh\left( \sum_{k=1}^{K} \sum_{l=1}^{L(k)} \hat{a}_{ijkl} f_{ijkl} + \upsilon \right) \qquad\qquad (5)$$

$$\hat{a}_{ijkl} = \sum_{m}^{V} \hat{w}_{ijklm} \tanh\left( \sum_{k}^{K} \sum_{l}^{L(k)} \hat{W}_{mkil} t_{kl} \right) \qquad\qquad (6)$$

wobei $\upsilon$ ein gaussförmig verteiltes Rauschen ist und V die Anzahl der verborgenen Einheiten der verborgenen Schicht sind. Die Sensoren B, **w** und **W** werden ebenfalls mit einem Back-Propagation-Algorithmus zur Minimierung der Kostenfunktion

$$\hat{C} = \sum_i \sum_j \left( \hat{h}_{ij} - \hat{H}_{ij} \right)^2 \qquad\qquad (7)$$

vorab trainiert, wobei die am Ende des Trainings vorliegenden Werte $\hat{H}_{ij}$ gleich 1 sind, wenn der Gegenstand an der Position ij der Zielgegenstand ist und -1 in den übrigen Fällen ist. Die Aktualisierungen der Merkmalsabbildungen und der Prioritätsabbildungen werden in einer parallelen Verarbeitung für sämtliche Positionen der Bildfläche 1 bei jedem Suchschritt aktualisiert.

Phase 2:

In der Phase 2 soll die Position des "Aufmerksamkeits-Suchscheinwerfers", d. h. des aktuellen Suchfelds 2, die durch $O_{ij}$ definiert ist, auf Grundlage der Information bestimmt werden, die in den verschiedenen Prioritätsabbildungen 12, 13, 14 bzw. 15 vorliegt. Dabei ist von Bedeutung, daß jede Prioritätsabbildung 12, 13, 14 bzw. 15 unabhängig von den übrigen Prioritätsabbildungen den Prioritätskonflikt löst und daß nach dieser Auswertung bei jedem Schritt in sämtlichen Prioritätsabbildungen ein neues Suchfeld 2 für den nächsten Suchschritt definiert wird. Daher ist für jede Prioritätsabbildung 12, 13, 14 bzw. 15 ein unabhängiges Hopfield-Netz 8, 9, 10 bzw. 16 vorgesehen. Diese Steuernetzwerke 8, 9, 10 bzw. 16 bestehen aus Pott-Neuronen. Pott-Neuronen sind dem Fachmann beispielsweise bekannt aus Peterson, C. und Södeberg, B. (1989) "A new method for mapping optimization problems onto neural networks", International Journal of Neural Systems, 1, 3-12.

Der Vorteil der Verwendung solcher Typen an Steuernetzwerken ist, daß die Randbedingung, daß das neue Suchfeld 2 am Ende des Ablaufs einer einzigen Position entsprechen soll, in einfacher Weise durch die Pott-Neuronen codiert werden kann. Es sei ein Pott-Spin $S_{ijk}$ für den Parameter k und die Position ij und ein Pott-Spin $\hat{S}_{ij}$ für den Spin in dem Steuernetzwerk vorausgesetzt, daß der Prioritätsabbildung 15 für eine höherwertige Verarbeitung zugeordnet ist. Die Dynamik eines neuralen Pott-Netzwerks ist durch die Energiefunktion der zugrundeliegenden Spin-Systeme festgelegt, so daß in dem vorliegenden Fall die Energiefunktion gegeben ist durch

$$E_k(S_{ijk}) = -\sum_i \sum_j \sum_k S_{ijk} h_{ijk} + \frac{\beta}{2} \sum_{i \neq l} \sum_{j \neq m} S_{ijk} S_{lmk} - \gamma \sum_i \sum_j \sum_k S_{ijk} \hat{S}_{ij} \tag{8}$$

Das Netzwerk entwickelt sich somit dynamisch zu Zuständen, in denen die Energiefunktion minimal ist. Der erste Term in Gleichung 8 berücksichtigt daher die Tatsache, daß die Situation am Ende des Ablaufs derart sein soll, daß nur ein Steuerneuron an der Position aktiv ist, an der ein Muster erwartet wird (d. h. maximale Überlappung zwischen S und h). Der zweite Term implementiert die Randbedingung, daß eine und nur eine Position aktiv sein soll. Der dritte Term gewährleistet die Konsistenz zwischen der höherwertigen Prioritätsabbildung 15 und den übrigen Prioritätsabbildungen 12, 13 und 14. Die dynamische Entwicklung dieses Steuernetzwerks (Hopfield-Netze 8, 9, 10, 16) kann zur Verwendung der sogenannten Meanfield-Näherung (s. Peterson, Södeberg, 1989) modelliert werden. Unter Verwendung des Mittelwerts von jedem Spin $V_{ijk} = \langle S_{ijk} \rangle$, kann die dynamische Entwicklung durch die folgenden Gleichungen ausgedrückt werden:

$$V_{ijk} = \frac{e^{U_{ijk}}}{\sum_l \sum_m e^{U_{lmk}}} , \tag{9}$$

$$U_{ijk} = -\alpha \frac{\partial}{\partial V_{ijk}} E_k(V_{ijk})$$

$$\tag{10}$$

$$= \alpha \left\{ h_{ijk} + V_{ijk} \frac{\partial h_{ijk}}{\partial V_{ijk}} - \beta \sum_{i \neq l} \sum_{j \neq m} V_{lmk} + \gamma \hat{V}_{ij} \right\}$$

Das dynamische Verhalten des Steuernetzes (Hopfield-Netzwerk 16), das der höherwertigen Prioritätsabbildung 15 zugeordnet ist, wird in gleicher Weise durch die folgenden Gleichungen beschrieben:

$$\hat{V}_{ij} = \frac{e^{\hat{U}_{ij}}}{\sum_l e^{\hat{U}_{lm}}} , \tag{11}$$

$$\hat{U}_{ij} = \alpha \left\{ \hat{h}_{ij} + \hat{V}_{ij} \frac{\partial \hat{h}_{ij}}{\partial \hat{V}_{ij}} + \beta \sum_{i \neq l} \sum_{j \neq m} \hat{V}_{lm} \right\} . \tag{12}$$

Das neue Suchfeld 2 wird somit durch Mittelung des unabhängigen Fokus $V_{ijk}$ an jeder Position definiert:

$$O_{ijk} = \frac{1}{K} \sum_k V_{ijk} \tag{13}$$

Wie in Fig. 1 und 2 dargestellt, werden dazu sämtliche Ausgangssignale der Hopfield-Netzwerke 8, 9, 10 bzw. 16 in einer Addiereinheit 19 zusammengefaßt und dann mit der Anzahl der Netzwerke (=Anzahl der Parameter) normiert (Normierungseinheit 20).

Bei jedem Schritt wird eine Iteration gemäß den Gleichungen 8 bis 13 ausgeführt, um die Veränderung des aktuellen Suchfensters 2 hin zu einem neuen Suchfeld zu definieren, das bei dem nächsten parallelen Schritt gemäß Phase 1 verwendet werden soll. Das System führt somit automatisch wechselweise einen Schritt gemäß Phase 1 und einen Schritt gemäß Phase 2 aus, bis das System zu einem stabilen Zustand entsprechend einem Beobachtungsfenster konvergiert, das den Wert 1 an der bestimmten Position ij aufweist und 0 an allen übrigen Positionen. Der stabile Zustand (Position ij) entspricht der Position des gesuchten Musters.

Das System wird dadurch initialisiert, daß keine einzige Position hervorgehoben wird, d. h. das aktuelle Suchfeld 2 gleich dem gesamten vorgegebenen Suchfeld 1 ist ($O_{ij}=1/S^2$), wobei S die Größe der Suchfläche 1 ist. Die Anzahl der Iterationsschritte bestimmt die Reaktionszeit zur Suche des Zielgegenstands.

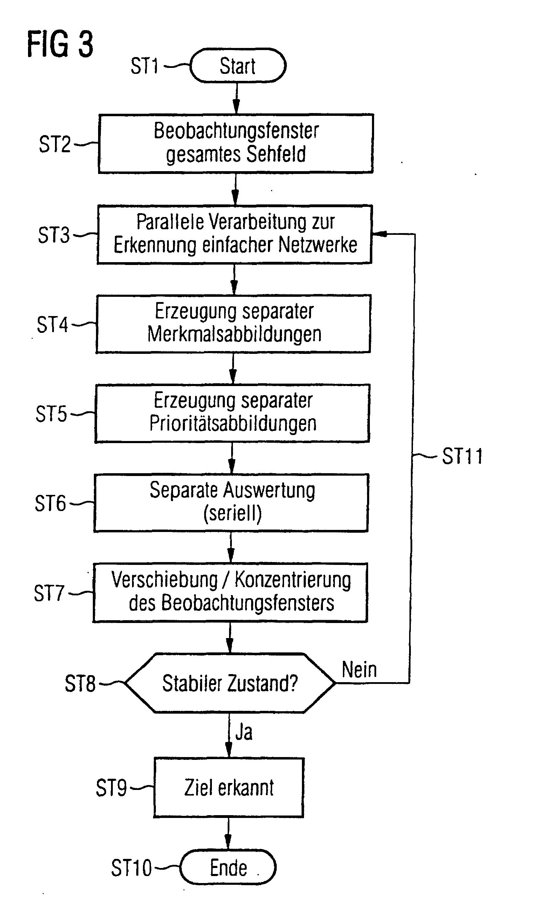

Der Ablauf soll nunmehr noch einmal anhand des Ablaufschemas von Figur 3 erläutert werden. Bei einem Start (Schritt ST1) wird ein durch Parameter gekennzeichnetes Referenzmuster definiert. Dann wird in einem Schritt ST2 das gesamte vorgegebene Suchfeld als aktuelles Suchfeld gesetzt.

Die folgenden Schritte ST3 und ST4 stellen zusammengefaßt die oben ausgeführte Phase 1 dar. In Schritt ST3 wird dabei eine topographische Abbildung des Suchfelds für jeden Parameter erzeugt. Dies kann parallel oder quasi-parallel erfogen. Im Schritt ST4 wird die topographische Abbildung von jedem Parameter mit den tatsächlichen Parameterwerten des zu suchenden Musters parametrisiert, was mittels der Aufmerksamkeits-Netzwerke 6 erfolgt.

Die folgenden Schritte ST5, ST6 und ST7 stellen zusammengefaßt die oben angeführte Phase 2 des Vorgangs dar. Zuerst werden die Konflikte für jeden Parameter durch die Hopfield-Netzwerke gelöst, denen die Informationen der jeweiligen Prioritätsabbildung 12, 13 bzw. 14 eingegeben wird. In einem Schritt ST6 werden die Positionsinformationen, die durch die Hopfield-Netzwerke ausgegeben werden, verknüpft, so daß in einem Schritt ST7 ein neues Suchfeld definiert werden kann. In einem Schritt ST8 wird entschieden, ob die Änderung zwischen dem neuen Suchfeld und dem aktuellen Suchfeld größer oder kleiner als ein vorbestimmter Schrankenwert ist. Für den Fall, daß die Veränderung kleiner als der vorbestimmte Schrankenwert ist und das System somit stabil konvergiert hat, wird in einem Schritt ST9 angenommen, daß das aktuelle Suchfeld die Position des suchenden Musters angibt, so daß das Muster in dieser Position als gefunden gilt und der Vorgang in einem Schritt ST10 beendet wird.

Für den Fall, daß in dem Schritt ST8 die Veränderung größer als der vorbestimmte Schrankenwert ist, wird das aktuelle Suchfeld als neues Suchfeld gesetzt (Schritt ST11) und der Vorgang kehrt zurück zu Schritt ST3.

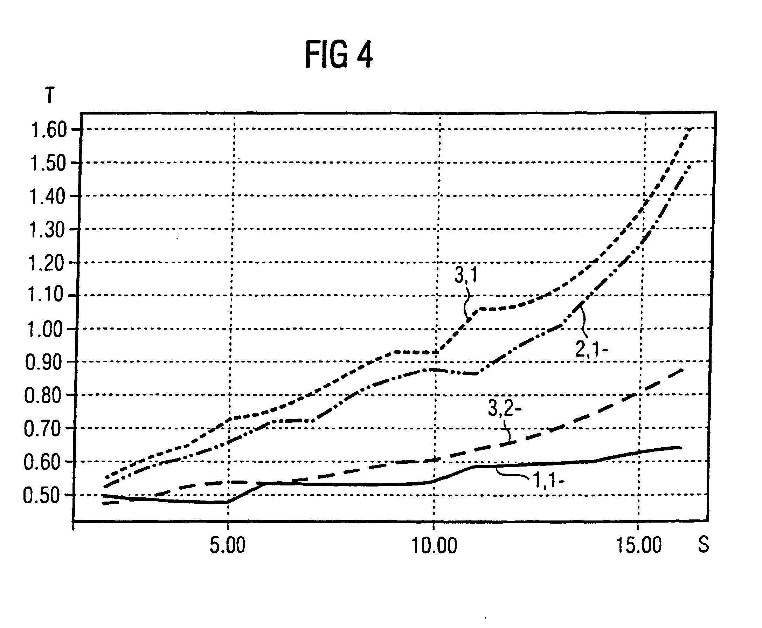

Bezugnehmend auf Fig. 4 sollen nun Meßergebnisse erläutert werden, wie sie mit dem in Fig. 1 und 2 dargestellten System erzielt wurden. Zuerst sollen verschiedene Arten von Suchaufgaben durch ein Zahlenpaar m und n definiert werden, wobei m die Anzahl der verschiedenen Merkmalstypen ist, durch das sich sogenannte Distraktoren von dem Zielgegenstand unterscheiden, und n ist die Anzahl an Merkmalstypen, durch die sich Distraktorgruppen gleichzeitig von dem Zielgegenstand unterscheiden. Mit anderen Worten, die reine Merkmalssuche entspricht einer 1,1-Suche, eine Standard-Zusammenhangsuche entspricht einer 2,1-Suche, eine Dreifach-Zusammenhangsuche kann eine 3,1- oder eine 3,2-Suche sein, wenn sich der Suchgegenstand von sämtlichen übrigen Distraktorgruppen durch einen bzw. zwei Merkmalstypen unterscheidet. Es sei angenommen, daß die Gegenstände sämtlich durch drei Merkmalstypen (K=3, beispielsweise Farbe, Größe und Position) definiert sind, die jeweils zwei Werte einnehmen können (L)k)=2, wobei k=1,2,3).

Wie in Fig. 4 zu sehen wurden in den Experimenten Bildgrößen von S=2 bis S=16 verwendet. Bei jeder Größe wurde das Experiment hundertmal wiederholt, wobei jedes Mal zufallsmäßig erzeugte Distraktoren und Zielgegenstände verwendet wurden. In Fig. 4 ist der Mittelwert der 100 simulierten Reaktionszeiten (in Millisekunden) als Funktion der Rahmengröße (Bildflächengröße) gezeigt.

Vor dem eigentlichen Versuchsablauf zur Messung der Reaktionszeiten wurden die zwei Aufmerksamkeits-Netzwerktypen, d. h. dasjenige für die reinen Merkmals-Prioritätsabbildungen sowie dasjenige zur Erzeugung der komplexeren Prioritätsabbildung 15 gemäß der in Gleichungen 4 bzw. 7 beschriebenen Kostenfunktionen trainiert. Die Anzahl der versteckten Neuronen V=20, die Anzahl der zum Training verwendeten Beispiele, d. h. die Distraktoren- und Zielgegenstandsvariation, betrug 2000. Nach 100 Iterationen ergab der Backpropagation-Algorithmus ausreichend gute minimalste Kostenfunktionen. Das gaussverteilte Rauschen wurde mit einer Standardabweichung σ=0,02 simuliert.

In Fig. 4 sind Ergebnisse gezeigt, die unter Verwendung von γ=0,01, d. h. hochwertiger Einfluß, für die 1,1- 2,1- 3,1- und 3,2-Suchen erhalten wurden. Die Steigungen der Reaktionszeit im Verhältnis zu der Bildfläche sind bei allen Ergebnissen konsistent mit bereits berichteten experimentellen Ergebnissen von anderen Systemen.

**EP 1 194 882 B1**

**Patentansprüche**

1. Verfahren zur Suche eines Referenzmusters, das durch wenigstens zwei vorbestimmte Parameter gekennzeichnet ist, in einem vorgegebenen Suchfeld,
   aufweisend die folgenden Schritte:

   a.) Setzen des vorgegebenen Suchfelds (1) als aktuelles Suchfeld,
   b.) Erzeugung (3, 6) jeweils einer topographische Abbildung (12, 13, 14) des aktuellen Suchfelds bezüglich eines jeden der vorbestimmten Parameter, wobei die topographische Abbildung den Wert des entsprechenden Parameters des Referenzmusters berücksichtigt,
   c.) voneinander unabhängige Verarbeitung (8, 9, 10) der Information der topographischen Abbildungen (12, 13, 14) zur Erzeugung jeweils einer Positionsinformation, die wenigstens eine vermutete Position des Referenzmusters in dem aktuellen Suchfeld bezüglich des jeweiligen Parameters angibt, und
   d.) Definition eines neuen Suchfelds auf Grundlage einer Verknüpfung (19) der jeweiligen Positionsinformationen,
   e.) wobei das neue Suchfeld (17) die vermutete Position des Referenzmusters in dem vorgegebenen Suchfeld angibt.

2. Verfahren nach Anspruch 1,
   **dadurch gekennzeichnet,**
   **daß** in Schritt b.) die Erzeugung der topographischen Abbildungen (12, 13, 14) durch eine parallele oder pseudoparallele Verarbeitung der Informationen des aktuellen Suchfelds erfolgt.

3. Verfahren nach Anspruch 1 oder 2,
   **dadurch gekennzeichnet,**
   **daß** in Schritt c.) die Informationen der topographischen Abbildungen jeweils durch ein neuronales Hopfield-Netzwerk (8, 9, 10) verarbeitet werden, wobei jeweils ein Hopfield-Netzwerk eine Positionsinformation ausgibt.

4. Verfahren nach Anspruch 3,
   **dadurch gekennzeichnet,**
   **daß** die Hopfield-Netzwerke (8, 9, 10) Pott-Neuronen enthalten.

5. Verfahren nach einem der vorhergehenden Ansprüche, weiterhin aufweisend die folgenden Schritte folgend auf den Schritt d.):

   f.) Ermitttlung der Veränderung zwischen dem neuen Suchfeld und dem aktuelle Suchfeld, und
   g.) für den Fall, daß die ermittelte Veränderung größer ist als ein vorgegebener Schrankenwert :

   - Setzen des aktuellen Suchfelds gleich dem neuen Suchfeld, und
   - Wiederholen der Schritte b.) bis e.),

   h.) für den Fall, daß die ermittelte Veränderung kleiner oder gleich dem vorgegebenen Schrankenwert ist:

   - Weitergehen zu Schritt e.)

6. Verfahren nach einem der vorhergehenden Ansprüche,
   **dadurch gekennzeichnet,**
   **daß** in Schritt b.) die topographischen Abbildungen (12, 13, 14) des aktuellen Suchfelds durch neuronale Netzwerke (6) erzeugt werden, die auf das Referenzmuster (7) trainiert sind und denen Informationen von parametrisierten Abbildungen (3, 4, 5) des aktuellen Suchfelds eingegeben werden.

7. Verfahren nach einem der vorhergehenden Ansprüche,
   **dadurch gekennzeichnet,**
   **daß** in Schritt b.) weiterhin eine kombinierte topographische Abbildung bezüglich der Kombination wenigstens zweier Parameter erzeugt und deren Informationen gemäß Schritt c.) verarbeitet werden.

8. Anwendung des Verfahrens nach einem der vorhergehenden Ansprüche zur automatisierten Suche von Gegenständen, die durch einen Roboter aufgegriffen werden sollen.

**Claims**

1. Method for searching for a reference pattern, which is **characterized by** at least two predetermined parameters, in a prescribed search field, having the following steps:

   a.) setting the prescribed search field (1) as current search field,
   b.) generating (3, 6) in each case one topographic image (12, 13, 14) of the current search field with reference to each of the predetermined parameters, the topographic image taking account of the value of the corresponding parameter of the reference pattern,
   c.) mutually independent processing (8, 9, 10) of the information of the topographic images (12, 13, 14) for the purpose of generating in each case one item of position information which specifies at least one presumed position of the reference pattern in the current search field with reference to the respective parameter, and
   d.) definition of a new search field on the basis of a combination (19) of the respective items of position information,
   e.) the new search field (17) specifying the presumed position of the reference pattern in the prescribed search field.

2. Method according to Claim 1, **characterized in that** in step b.) the generation of the topographic images (12, 13, 14) is performed by parallel or pseudo-parallel processing of the information of the current search field.

3. Method according to Claim 1 or 2, **characterized in that** in step c.) the information of the topographic images is respectively processed by a neural Hopfield network (8, 9, 10), one Hopfield network in each case outputting an item of position information.

4. Method according to Claim 3, **characterized in that** the Hopfield networks (8, 9, 10) include Pott neurons.

5. Method according to one of the preceding claims, further having the following steps subsequent to step d.):

   f.) determination of the variation between the new search field and the current search field, and
   g.) for the case in which the determined variation is greater than a prescribed bound:

   - setting the current search field to be equal to the new search field, and
   - repeating steps b.) to e.),

   h.) for the case in which the determined variation is less than or equal to the prescribed bound:

   - proceeding to step e.).

6. Method according to one of the preceding claims, **characterized in that** in step b.) those topographic images (12, 13, 14) of the current search field are generated by neural networks (6) which are trained to the reference pattern (7) and into which information on parameterized images (3, 4, 5) of the current search field are input.

7. Method according to one of the preceding claims, **characterized in that** in step b.) a combined topographic image continues to be generated with reference to the combination of at least two parameters, and their information is processed in accordance with step c.).

8. Application of the method according to one of the preceding claims for the automated search for objects which are to be picked up by a robot.

**Revendications**

1. Procédé de recherche d'une forme de référence **caractérisée par** au moins deux paramètres prédéterminés dans un champ de recherche prédéfini, comprenant les étapes suivantes :

   a.) activation du champ de recherche prédéfini (1) comme champ de recherche actuel,
   b.) production (3, 6) de à chaque fois une image topographique (12, 13, 14) du champ de recherche actuel pour chacun des paramètres prédéterminés, ladite image topographique respectant la valeur du paramètre correspondant de la forme de référence,

c.) traitement individuel (8, 9, 10) de l'information des images topographiques (12, 13, 14) pour obtenir à chaque fois une information de position indiquant au moins une position présumée de la forme de référence dans le champ de recherche actuel pour le paramètre respectif, et

d.) définition d'un nouveau champ de recherche sur la base d'une mise en relation (19) des informations de position respectives,

e.) le nouveau champ de recherche (17) indiquant la position présumée de la forme de référence dans le champ de recherche prédéfini.

2. Procédé selon la revendication 1,
   **caractérisé en ce que**,
   à l'étape b.), la production des images topographiques (12, 13, 14) s'effectue par un traitement parallèle ou pseudoparallèle des informations du champ de recherche actuel.

3. Procédé selon la revendication 1 ou 2,
   **caractérisé en ce que**,
   à l'étape c.), les informations des images topographiques sont traitées par un réseau neuronal de Hopfield (8, 9, 10), chaque réseau de Hopfield fournissant une information de position.

4. Procédé selon la revendication 3,
   **caractérisé en ce que**
   les réseaux de Hopfield (8, 9, 10) contiennent des neurones de Pott.

5. Procédé selon l'une des revendications précédentes,
   comprenant en outre les étapes suivantes consécutives à l'étape d.) :

   f.) détermination de la variation entre le nouveau champ de recherche et le champ de recherche actuel, et
   g.) si la variation déterminée est supérieure à une valeur seuil prédéfinie :

   - sélectionner le champ de recherche actuel comme nouveau champ de recherche, et
   - répéter les étapes b.) à e.),

   h.) si la variation déterminée est inférieure ou égale à la valeur seuil prédéfinie :

   - passer à l'étape e.).

6. Procédé selon l'une des revendications précédentes,
   **caractérisé en ce que**,
   à l'étape b.), les images topographiques (12, 13, 14) du champ de recherche actuel sont produites par des réseaux neuronaux (6) lesquels sont entraînés à la forme de référence (7) et auxquels on fournit des informations d'images paramétriques (3, 4, 5) du champ de recherche actuel.

7. Procédé selon l'une des revendications précédentes,
   **caractérisé en ce que**,
   à l'étape b.), on produit en outre une image topographique combinée relative à la combinaison d'au moins deux paramètres et on traite leurs informations selon l'étape c.).

8. Application du procédé selon l'une des revendications précédentes pour la recherche automatisée d'objets destinés à être saisis par un robot.

**FIG 1**

Digitale V-Kamera (18)

Steuerung Position / Größe (11)

Verarbeitungs-einheit Merkmal 1 (3)
Verarbeitungs-einheit Merkmal 2 (4)
Verarbeitungs-einheit Merkmal 3 (5)

Aufmerksamkeits - NN (6)
Aufmerksamkeits - NN (6)
Aufmerksamkeits - NN (6)

Zielspeicher (7)

Hopfield - N. (8)
Hopfield - N. (9)
Hopfield - N. (10)

Addier-einheit (19)

Normier-einheit (20)

FIG 2

# FIG 3

ST1 — ( Start )

ST2 — Beobachtungsfenster gesamtes Sehfeld

ST3 — Parallele Verarbeitung zur Erkennung einfacher Netzwerke

ST4 — Erzeugung separater Merkmalsabbildungen

ST5 — Erzeugung separater Prioritätsabbildungen

ST6 — Separate Auswertung (seriell)

ST7 — Verschiebung / Konzentrierung des Beobachtungsfensters

ST11

ST8 — Stabiler Zustand?     Nein

Ja

ST9 — Ziel erkannt

ST10 — ( Ende )

# FIG 4